# EUROPÄISCHE PATENTSCHRIFT

(11) **EP 1 520 114 B1**
(45) Veröffentlichungstag und Bekanntmachung des Hinweises auf die Patenterteilung: **02.08.2006**
(21) Anmeldenummer: 03762540.7
(22) Anmeldetag: 28.06.2003
(51) Int. Cl.: F16D 23/06

(54) **DRUCKSTÜCK MIT EINEM RASTELEMENT**
PRESSURE PIECE COMPRISING A CATCH ELEMENT
PIECE DE PRESSION POURVUE D'UN ELEMENT D'ENCLIQUETAGE

(30) Priorität: 05.07.2002 DE 10230177
(43) Veröffentlichungstag der Anmeldung: 06.04.2005
(73) Patentinhaber: Schaeffler KG, 91074 Herzogenaurach (DE)
(72) Erfinder: MARTIN, Reiner, 96178 Pommersfelden (DE); WÖRRLEIN, Ulrich, 90607 Rückersdorf (DE); KICK-RODENBÜCHER, Reinhard, 90455 Nürnberg (DE)
(86) Internationale Anmeldenummer: PCT/EP2003/006869
(87) Internationale Veröffentlichungsnummer: WO 2004/005739

(56) Entgegenhaltungen:
- EP-A- 0 090 084
- DE-A- 1 555 158
- PATENT ABSTRACTS OF JAPAN vol. 011, no. 160 (M-592), 23. Mai 1987 (1987-05-23) -& JP 61 294246 A (TOYOTA MOTOR CORP), 25. Dezember 1986 (1986-12-25)

## Beschreibung

### Gebiet der Erfindung

Die Erfindung betrifft eine Schaltkupplungseinheit, zumindest bestehend aus einem Schaltmuffenträger, einer Schaltmuffe und einem Druckstück mit wenigstens einem Rastelement, wobei das Druckstück radial zwischen einer auf einem Muffenträger verdrehfest sitzenden Schaltmuffe und dem um eine Rotationsachse rotierbaren Muffenträger angeordnet sowie das Druckstück auf einer gedachten Kreisbahn um die Rotationsachse bewegbar ist und wobei das Rastelement in Richtung des Druckstückes elastisch einfederbar gegen die Schaltmuffe elastisch vorgespannt und dabei das Rastelement zumindest zeitweise in einer Rastvertiefung der Schaltmuffe verrastet ist, wodurch das Druckstück über das in der Rastvertiefung verrastete Rastelement mit der Schaltmuffe relativ zu dem Muffenträger wenigstens zeitweise sowie begrenzt längs der Rotationsachse bewegbar ist.

### Hintergrund der Erfindung

Eine Schaltkupplungseinheit, zumindest bestehend aus einem Schaltmuffenträger, einer Schaltmuffe und einem Druckstück der gattungsbildenden Art ist in EP 0 870 941 A1 beschrieben. An dem Grundkörper des Druckstückes aus Blech ist ein elastisches Rastelement ausgebildet. Das Rastelement, in Form eines Federbügels, ist aus dem flachen Blech des Grundkörpers geformt, steht von dem Druckstück ab und ist in seine Druckrichtung bogenförmig ausgeführt. Der Grundkörper des Druckstückes stützt sich radial in Richtung der Rotationsachse eines Schaltmuffenträgers an dem Schaltmuffenträger ab, wobei das Federelement radial nach außen gegen eine auf dem Schaltmuffenträger sitzende Schaltmuffe vorgespannt und zeitweise in einer Rastvertiefung verrastet ist. Bei einer Schaltbewegung, d. h. einer Längsbewegung der Schaltmuffe entlang der Rotationsachse relativ zu dem Muffenträger, nimmt die Schaltmuffe das Druckstück zunächst axial entlang der Rotationsachse in Richtung des zu schaltenden Gangrades mit, wodurch der bekannte Synchronisationsprozess eingeleitet ist. Das Druckstück trifft dabei auf einen der Synchronringe der synchronisierten Schaltkupplung und wird während des Synchronisationsprozesses schließlich in seiner axialen Bewegung gestoppt. Der axiale Widerstand an dem Druckstück zwingt das Rastelement bei weiter in Richtung des Gangrades längsbewegter Schaltmuffe aus der Rastvertiefung an der Schaltmuffe in Richtung des Grundkörpers des Druckstückes einzufedern. Das Rastelement schnappt wieder in die Rastvertiefung ein, wenn die Schaltmuffe in die neutrale Stellposition oder zu einem Gangwechsel von dem geschalteten Gangrad axial zurückgeführt wird.

Eine derartige Schaltkupplungseinheit, zumindest bestehend aus einem Schaltmuffenträger, einer Schaltmuffe und einem Druckstück ist relativ einfach gestaltet und wie auch in weiteren bekannten Anwendungen mit blattfederartigen bzw. bügelartigen flachen Federelementen als Rastelemente versehen. Flache, bügelartig gestaltete Federelemente sind gegenüber den in dieser Anwendung auch verwendeten Schraubenfedern oftmals bevorzugt, da sie relativ viele Variationen in der Auslegung der Federcharakteristik zulassen und häufig auch Sperrfunktionen übernehmen. Nachteilig an der an sich zufriedenstellenden Lösung ist einerseits, dass die Stabilität des Schaltmuffenträgers, insbesondere die Steifigkeit seiner Körperstruktur, aufgrund der Ausnehmungen zur Aufnahme des Druckstückes negativ beeinflusst ist. Andererseits sind derartige Druckstücke in der Regel nicht robust genug für den Einsatz in automatisierten Schaltgetrieben. Die Schaltung in derartigen Getrieben ist beispielsweise elektromotorisch betätigt. Dabei findet der Synchronisations- und Schaltvorgang vergleichsweise zu handkraftbetätigten Schaltvorrichtungen in wesentlich kürzeren Zeiträumen und ohne das durch die Bedienperson üblicherweise aufgebrachte Feingefühl statt. Die Einzelteile der Schaltkupplung treffen teilweise schlagartig aufeinander, wodurch das aus Federstahl gefertigte Druckstück mit seinem Rastelement gefährdet ist.

Eine Schaltkupplungseinheit gemäß dem Oberbegriff des Patentanspruchs 1 ist beispielweise aus der US 6,296,100 - B1 bekannt.

### Zusammenfassung der Erfindung

Die Aufgabe der Erfindung ist es daher, eine Schaltkupplungseinheit, zumindest bestehend aus einem Schaltmuffenträger, einer Schaltmuffe und einem Druckstück mit einem Rastelement zu schaffen, das robust und von geringer Bauhöhe ist, und bei dem die Vorteile des Einsatzes von flachen Federelementen für das Rastelement berücksichtigt sind und das sich kostengünstig herstellen lässt.

Diese Aufgabe ist nach dem Gegenstand des kennzeichnenden Teils des Anspruchs 1 dadurch gelöst, dass das Druckstück ein das Rastelement zumindest teilweise aufnehmendes Gehäuse aufweist. Weiterhin steht das Rastelement zumindest an einer Seite des Druckstückes in eine der beiden tangentialen Richtungen zu einer Kreisbahn hervor, auf der das durch die rotierende Einheit aus Schaltmuffe und Schaltmuffenträger mitgenommene Druckstück um die Rotationsachse der Einheit umläuft. Das Druckstück ist in die tangentiale Richtung gegen die Schaltmuffe elastisch vorgespannt und wenigstens zeitweise in einer dem Druckstück in der tangentialen Richtung gegenüberliegenden Rastvertiefung an der Schaltmuffe verrastet.

Das Gehäuse ist vorzugsweise ein Blechformteil und schalenförmig gestaltet. Dabei weist das Gehäuse mindestens einen mit seiner flachen Seite in radiale Richtung von der Rotationsachse weg oder zu der Rotationsachse hinweisenden Boden auf. Von dem Boden gehen zwei bis vier, vorzugsweise in radiale Richtung, abgewinkelte Seitenwände ab. Je nach Ausführung des Druckstückes bleibt das Gehäuse in eine radiale Richtung offen oder ist an seiner dem Boden gegenüberliegenden Seite abgedeckt. Zum Abdecken des Gehäuses ist entweder ein einteilig mit dem Gehäuse ausgebildeter und vorzugsweise von einer der Seitenwände abgewinkelter oder ein separater, vorzugsweise auch aus Blech geformter sowie auf das bzw. in das Gehäuse eingesetzter Deckel vorgesehen.

Das Rastelement ist ein zu dem Gehäuse separat gefertigtes Einzelteil und ist in das Gehäuse eingesetzt. Dadurch ist das Rastelement mit Ausnahme des aus dem Gehäuse ragenden sowie federelastisch gegen die Schaltmuffe vorgespannten Anteiles des Rastelementes durch das Gehäuse gut gegen mechanische Einflüsse geschützt. Wenigstens ein, vorzugsweise beide, in die Verlaufsrichtung der Rotationsachse gerichteten Seiten des Gehäuses sind für den Anlauf des Druckstückes an jeweils einem durch das Druckstück zu aktivierenden Synchronring vorgesehen.

Die Schaltkupplungseinheit gemäß Erfindung benötigt wenig radialen Bauraum, da der Hub des Rastelementes beim Ein- bzw. Ausrasten in die Rastvertiefung tangential gerichtet ist. Der radiale Bauraum des Druckstückes ist nur noch von der Abmessung des Federelementes quer zur Druckrichtung (beispielsweise durch den Durchmesser einer Schraubenfeder), der radialen Bauhöhe des Rastelementes und der/den Wandstärke(n) des Gehäuses bestimmt. Es genügt unter Umständen schon, durch das Weglassen eines oder mehrerer in Umfangsrichtung zueinander benachbarter Zähne der Verzahnung der Schaltmuffe und/oder des Schaltmuffenträgers genügend Bauraum für die Aufnahme des Druckstückes zu schaffen. Das Druckstück ist in die so entstandene Lücke eingesetzt. In der Regel sind drei oder mehr der Druckstücke am Umfang der Einheit verteilt. Der Schaltmuffenträger oder die Schaltmuffe sind nicht durch eine oder nur durch eine Nut radialer Tiefe für die Aufnahme der Druckfeder geschwächt.

Eine Ausgestaltung der Erfindung sieht vor, eine als Druckfeder ausgelegte Schraubenfeder zum Vorspannen des Rastelementes einzusetzen. Die Schraubenfeder ist mit ihrer Achse quer zur Rotationsachse sowie tangential zu der Kreisbahn ausgerichtet in dem Gehäuse aufgenommen. Mit einem Federende stützt sich die Feder an dem Gehäuse ab und spannt das Rastelement gegen die Schaltmuffe vor.

Eine weitere Ausgestaltung der Erfindung ist gekennzeichnet durch zwei der Rastelemente. Eines der Rastelemente steht an einer ersten von zwei einander abgewandten Seiten des Druckstückes aus dem Druckstück hervor und ist gegen die Schaltmuffe vorgespannt. Das zweite der Rastelemente steht an der zweiten Seite der voneinander abgewandten Seiten des Druckstückes hervor und ist in tangentiale Richtung wiederum gegen die Schaltmuffe vorgespannt. Jedes der Rastelemente ist zumindest zeitweise - zeitgleich mit dem anderen Rastelement oder zeitversetzt zu dem anderen Rastelement - in jeweils einer von zwei Rastvertiefungen an der Schaltmuffe verrastet. Alternativ dazu ist das eine der Rastelemente tangential gegen die Schaltmuffe und das andere der zwei Rastelemente tangential gegen den Schaltmuffenträger vorgespannt, wobei die Schaltmuffe eine Rastvertiefung und der Schaltmuffenträger eine Rastausnehmung aufweist, in der das jeweilige Rastelement zumindest zeitweise eingerastet ist. Die Rastvertiefungen bzw. Rastausnehmungen sind vorzugsweise an den in die tangentiale Richtung weisenden Flanken der die Zahnlücke bzw. die Aufnahmenut für das Druckstück begrenzenden Zähnen der Schaltmuffe bzw. des Schaltmuffenträgers oder an anderen Wandabschnitten des Schaltmuffenträgers bzw. der Schaltmuffe ausgebildet. Das Druckstück mit den zwei Rastelementen weist mit einer Ausgestaltung der Erfindung eine als Druckfeder ausgelegte Schraubenfeder auf, die beide Rastelemente gleichzeitig jedoch in unterschiedliche tangentiale Richtungen gegen die Schaltmuffe bzw. gegen die Schaltmuffe sowie den Schaltmuffenträger vorspannt.

Das Rastelement in dem erfindungsgemäßen Druckstück ist vorzugsweise eine Kugel oder ein Blechformteil. Das Blechformteil weist eine in dem Gehäuse aufgenommene und gehaltene flache Basis auf, deren flache Seite parallel zu der Rotationsachse ausgerichtet ist. Aus der Basis ist eine Auswölbung tangential ausgeformt, die aus dem Gehäuse des Druckstückes hervorsteht und mit der das Rastelement gegen die Schaltmuffe bzw. die Schaltmuffe und den Schaltmuffenträger vorgespannt ist sowie mit der das Rastelement in der Rastvertiefung bzw. Rastausnehmung verrastet.

In einer alternativen Ausgestaltung der Erfindung ist das Rastelement mindestens eine in die tangentiale Richtung vorspannende bügelförmige Druckfeder. Die Druckfeder ragt teilweise aus dem Gehäuse und ist ansonsten in dem Gehäuse aufgenommen. Der aus dem Gehäuse ragende Teil der Druckfeder ist gegen die Schaltmuffe bzw. die Schaltmuffe und den Schaltmuffenträger vorgespannt und zumindest zeitweise in einer Rastvertiefung bzw. Rastausnehmung verrastet. Die Druckfeder weist vorzugsweise zwei Schenkel auf, wobei einer der Schenkel mit einer in die tangentiale Richtung hervorstehenden Krümmung gegen die Schaltmuffe vorgespannt ist und dabei mit der Krümmung zumindest zeitweise in der Rastvertiefung einrastet. Der andere Schenkel stützt sich entweder in dem Gehäuse ab oder steht in einer zu der tangentialen Richtung des ersten Schenkels entgegengesetzten tangentialen Richtung an einer zweiten von der ersten Seite des Druckstückes abgewandten Seite hervor und ist dort wiederum wahlweise entweder gegen die Schaltmuffe oder den Schaltmuffenträger vorgespannt. Die Schenkel sind bevorzugt mit einem Steg miteinander verbunden, der tangential oder in beliebiger Richtung ausgerichtet ist.

Ein unabhängiger Anspruch sieht für eine Schaltkupplungseinheit mit den Merkmalen des Oberbegriffs des Anspruchs 1 vor, dass das Druckstück und das Rastelement gemeinsam durch eine bügelförmige Druckfeder mit zwei Schenkeln gebildet sind. Diese Sonderform des Druckstückes weist kein Gehäuse auf, da die entsprechend gestaltete Bügelfeder die Funktionen des Druckstückes und des bzw. der Rastelemente in sich vereint. So ist eine Bügelfeder vorgesehen, bei der die Schenkel in entgegengesetzte tangentiale Richtung zu der gedachten Kreisbahn, auf der das Druckstück um die Rotationsachse umläuft, gegen die Schaltmuffe vorgespannt sind. Jeder der Schenkel verrastet - zeitgleich mit dem anderen der Schenkel oder zeitversetzt zu dem anderen der Schenkel - zumindest zeitweise in jeweils einer von zwei der Rastvertiefungen an der Schaltmuffe. Alternativ dazu ist einer der Schenkel gegen die Schaltmuffe und der andere Schenkel gegen den Muffenträger vorgespannt, wobei die Schenkel - zeitgleich mit dem einen in der Rastvertiefung verrasteten anderen Schenkel oder zeitversetzt zu dem anderen - zumindest zeitweise in der Rastvertiefung bzw. Rastausnehmung verrasten.

Die Schenkel sind vorzugsweise wiederum mit einem quer zu den Verlaufsrichtungen der Rotationsachse ausgerichteten Steg verbunden. Jeder der Schenkel geht gleichgerichtet mit dem anderen der Schenkel zunächst in eine der Verlaufsrichtungen von dem Steg abgewinkelt ab und ist dann in seinem weiteren Verlauf an seiner der Rastvertiefung zugewandten Seite ausgewölbt und weist schließlich mit seinem freien Ende in die Verlaufsrichtung. Die Anlaufflächen für den Kontakt mit dem jeweiligen Synchronring sind an dem Steg bzw. an den freien Enden der Druckfeder ausgebildet. Der Kontakt zwischen dem Synchronring und dem Druckstück ist durch die aufeinander zugekrümmt verlaufenden freien Enden der Druckfeder verbessert.

### Kurze Beschreibung der Zeichnungen

Die Erfindung wird nachfolgend anhand von mehreren Ausführungsbeispielen näher erläutert. Es zeigen:
- Figuren 1 bis 3: eine Schaltkupplungseinheit mit mehreren Druckstücken in einer Ausführung gemäß Erfindung in unterschiedlichen Ansichten, Schnittdarstellungen sowie in zwei unterschiedlichen Schaltstellungen der Schaltkupplung,
- Figuren 4 bis 7: weitere Ausführungsbeispiele von erfindungsgemäßen Schaltkupplungseinheiten, bei denen das oder die Rastelemente gegen die Schaltmuffe vorgespannt sind,
- Figuren 8 und 9: weitere Ausführungsbeispiele einer erfindungsgemäßen Schaltkupplungseinheit bei dem ein Rastelement gegen die Schaltmuffe und das andere Rastelement gegen den Schaltmuffenträger vorspannt und
- Figur 10: eine Schaltkupplungseinheit, bei der das Druckstück und das Rastelement gemeinsam durch eine bügelförmige Druckfeder mit zwei Schenkeln gebildet ist. Diese Ausführungsform gehört nicht zur Erfindung.

### Detaillierte Beschreibung der Zeichnungen

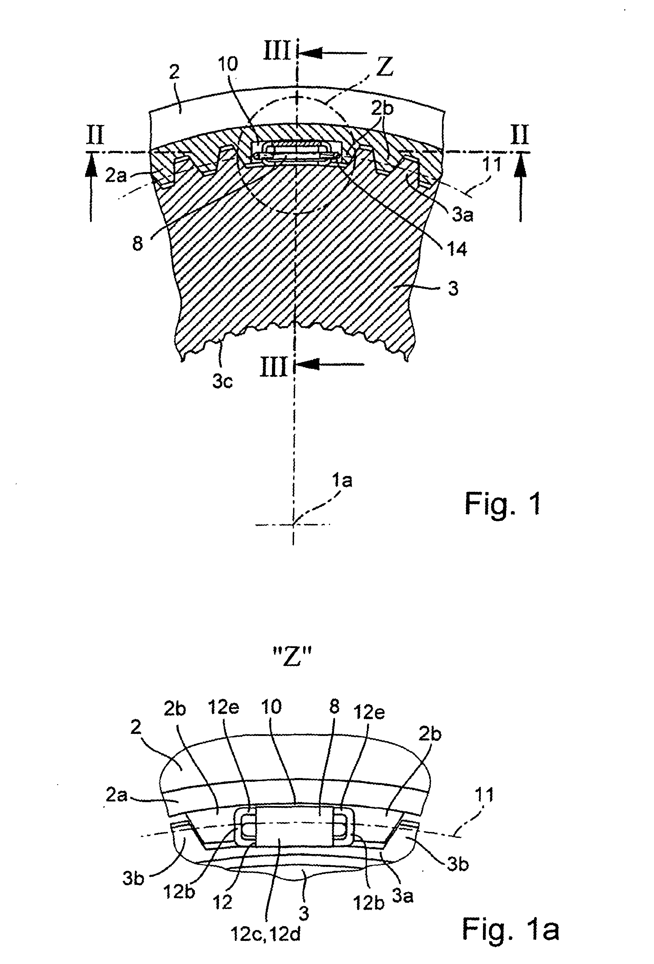

Die Figuren 1 bis 3a zeigen eine Schaltkupplungseinheit 1 aus einer Schaltmuffe 2, einem Schaltmuffenträger 3, mehreren Synchronringen 4, 5, 6, einem Kupplungskörper 7 sowie aus mindestens drei Druckstücken 8. Der Schaltmuffenträger 3 sitzt auf einer nicht dargestellten Getriebewelle und greift mit einem Keilprofil 3c oder ähnlichem in ein entsprechendes Gegenprofil an der Getriebewelle. Auf dem Schaltmuffenträger 3 sitzt die Schaltmuffe 2. Die Schaltmuffe 2 weist eine Innenverzahnung 2a auf, mit der die Schaltmuffe 2 in eine entsprechende Gegenverzahnung 3a an dem Schaltmuffenträger 3 eingreift. Die Schaltmuffe 2 ist längsverschiebbar auf dem Schaltmuffenträger 3 angeordnet. Über die miteinander verzahnten Profile 3c und die Verzahnungen 2a, 3a sind die Schaltmuffe 2, der Schaltmuffenträger 3 und die Getriebewelle verdrehfest miteinander verbunden, so dass die Getriebewelle, der Schaltmuffenträger 3 und die Schaltmuffe 2 gemeinsam und in Umfangsrichtung relativ zueinander unbeweglich um die Rotationsachse 1a rotieren. Beidseitig des Schaltmuffenträgers 3 sind die Synchronringe 4, 5 und 6 angeordnet, von denen die äußeren Synchronringe 4 und die inneren Synchronringe 6 jeweils verdrehfest an dem Schaltmuffenträger 3 angreifen und demzufolge mit der Getriebewelle synchron um die Rotationsachse 1a rotieren. Jeder der Zwischenringe 5 ist verdrehfest mit dem Kupplungskörper 7 verbunden. Der Kupplungskörper 7 ist wiederum verdrehfest mit einem nicht dargestellten Gangrad gekoppelt und weist eine Kupplungsverzahnung 7a für den Eingriff der Innenverzahnung 2a auf. Das Gangrad ist frei auf der Getriebewelle um die Rotationsachse 1 a zur Getriebewelle drehbar gelagert, so dass das Gangrad, der Kupplungskörper 7 und der Zwischenring 5 bei nicht geschaltetem Gang gemeinsam relativ zur Getriebewelle drehbar sind.

Die Druckstücke 8 sitzen radial sowie am Umfang verteilt zwischen dem Schaltmuffenträger 3 und der Schaltmuffe 2. Von den Druckstücken 8 ist beispielhaft nur ein Ausführungsbeispiel bildlich dargestellt. Aus Figur 1a, einer vergrößerten nicht geschnittenen Darstellung des Details Z aus Figur 1 ist zu erkennen, dass durch fehlende bzw. modifizierte Zähne 2b, 3b der Innenverzahnung 2a bzw. der Gegenverzahnung 3a für jedes der Druckstücke 8 eine Lücke 10 für die Aufnahme des Druckstückes 8 geschaffen ist. Die Druckstücke 8 sind in Umfangsrichtung der Schaltmuffe 2 fest aber in die Verlaufsrichtungen der Rotationsachse 1a axial beweglich zwischen dem Schaltmuffenträger 3 und der Schaltmuffe 2 aufgenommen. Das Rotieren der Einheit aus dem Schaltmuffenträger 3 und der Schaltmuffe 2 führt dazu, dass die Druckstücke 8 sich synchron mit der Einheit und auf einer Kreisbahn 11 um die Rotationsachse 1a bewegen.

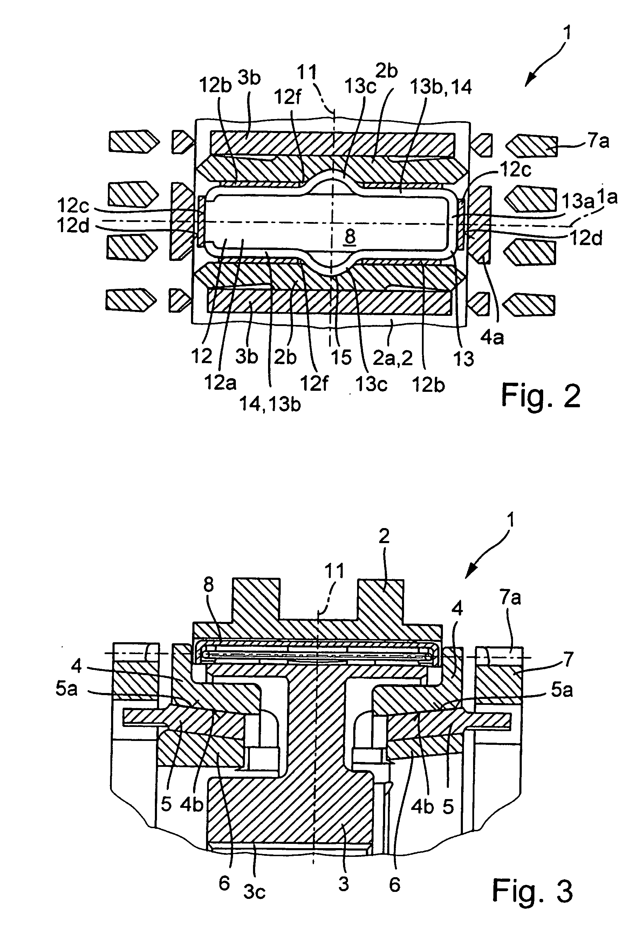

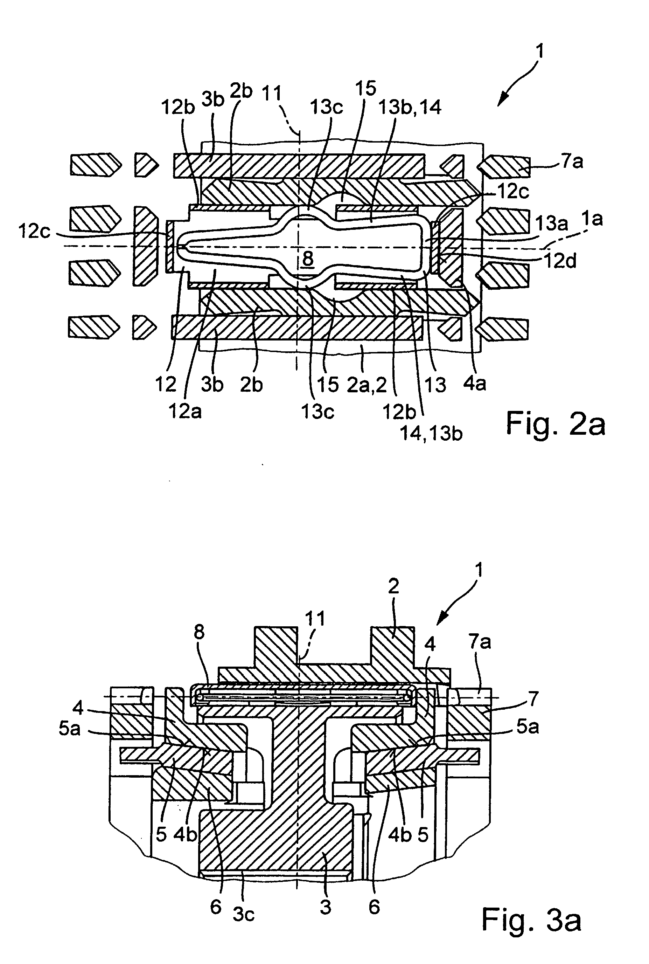

Das Druckstück 8 weist ein Gehäuse 12 auf, dessen Gestaltung insbesondere aus den Figuren 1 a, 2 und 2a ersichtlich ist. Die Figuren 2 und 2a zeigen einen Schnitt durch die Schaltkupplungseinheit 1 entlang der Linie II-II nach Figur 1 in unterschiedlichen Schaltstellungen der Schaltmuffe 2. Das Gehäuse 12 ist aus Blech geformt und mit einem flachen sowie parallel zu der Rotationsachse 1a ausgerichteten Boden 12a sowie mit Seitenwänden 12b und 12c versehen. Die Seitenwände 12b und 12c sind in Richtung der Schaltmuffe 2 von dem Boden 12a abgewinkelt. Die quer zu der Verlaufsrichtung der Rotationsachse 1a ausgerichteten Seitenwände 12c weisen eine Planfläche 12d für den Kontakt des Druckstückes 8 mit dem äußeren Synchronring 4 auf. Die quer zu der Kreisbahn 11 ausgerichteten Seitenwände 12b weisen Durchbrüche 12f auf. Von den Seitenwänden 12b sind Wandabschnitte 12e abgewinkelt, die das Druckstück 8 an seiner dem Boden 12a gegenüberliegenden Seite zumindest teilweise abdecken (Figur 1, 1 a).

In dem Gehäuse 12 ist eine bügelförmig ausgebildete Druckfeder 13 aufgenommen und von den Seitenwänden 12b, 12c sowie von den Wandabschnitten 12e zumindest teilweise eingekapselt. Die Druckfeder 13 weist zwei mittels eines Steges 13a verbundene Schenkel 13b auf. Jeder der Schenkel 13b ist ein Rastelement 14 und weist einen von dem Schenkel 13b tangential zur Kreisbahn 11 ausgerichtet abgehenden Bogen 13c auf, mit dem der Schenkel 13b einen der Durchbrüche 12f durchgreift. Die Rastelemente 14 stehen somit an den voneinander abgewandten Seiten des Druckstückes 8 mit dem Bogen 13c aus dem Gehäuse 12 hervor. Die Schenkel 13b sind in der nach Figur 2 gezeigten Schnittebene II-II bestrebt, voneinander weg und somit tangential zu dem Kreisbogen 11 aufzuspreizen und spannen den Bogen 13c somit in die zu der Kreisbahn 11 tangentiale Richtung gegen einen der halbierten der Zähne 2b der Schaltmuffe 2 vor.

Die Figuren 2, 2a bzw. 3, 3a zeigen Schnittdarstellungen der Schaltkupplungseinheit 1 aus Figur 1 entlang den Linien II-II bzw. III-III. In ihrer neutralen Position nach den Figuren 2 und 3 steht die Schaltmuffe 2 zwischen den zwei nicht geschalteten Gangrädern. Jeder der Bögen 13c der Rastelemente 14 ist in eine der Rastvertiefungen 15 an einem der Zähne 2b eingerastet. Bei einer Bewegung der Schaltmuffe 2 längs in eine der Verlaufsrichtungen der Rotationsachse 1a zum Schalten eines der Gangräder nimmt die Schaltmuffe 2 das Druckstück 8 über die in den Rastvertiefungen 15 eingerasteten Rastelemente 14 zunächst längs mit. Das Druckstück 8 trifft mit seiner dem zu schaltenden Gangrad zugewandten Planfläche 12d auf einen Anschlag 4a an dem äußeren Synchronring 4. Das Druckstück 8 drückt den äußeren Synchronring 4 mit seiner inneren konischen Reibfläche 4b längs der Rotationsachse 1 a auf die äußere konische Reibfläche 5a des Zwischenringes 5. Dadurch ist der Synchronisationsprozess in der Schaltkupplungseinheit 1 eingeleitet. Die Schaltmuffe 2 bewegt sich weiter in Richtung des Kupplungskörpers 7 über die Position nach Figur 2a, 3a hinaus, bis die Innenverzahnung 2a in die Kupplungsverzahnung 7a einspurt und das Gangrad somit drehfest mit der Einheit aus Schaltmuffe 2 und Schaltmuffenträger 3 verbunden ist.

In der Position nach Figur 2a, 3a ist das Druckstück 8 durch den auf dem Zwischenring 5 auflaufenden äußeren Synchronring 4 an dem Anschlag 4a in seiner Bewegung längs zur Rotationsachse 1a schließlich gestoppt. Die Rastelemente 14 sind durch die sich weiter bewegende Schaltmuffe 2 sowie gegen die Vorspannung der Schenkel 13b zum Ausweichen in Richtung des Druckstückes 8 bzw. zum Ausweichen in das/dem Druckstück 8 gezwungen und die Bögen 13c rasten aus den Rastvertiefungen 15 aus. Die Rastelemente 14 mit den Bögen 13c sind dabei weiter gegen die sich längs relativ zu dem Druckstück 8 bewegende Schaltmuffe 2 vorgespannt. Bei einer Schaltbewegung der Schaltmuffe 2 längs in die Position nach Figur 2, 3 zurück, federn die Schenkel 13b wieder auf, wenn die Rastvertiefungen 15 auf die Bögen 13c treffen. Die Rastelemente 14 rasten dann wieder in die Rastvertiefungen 15 ein.

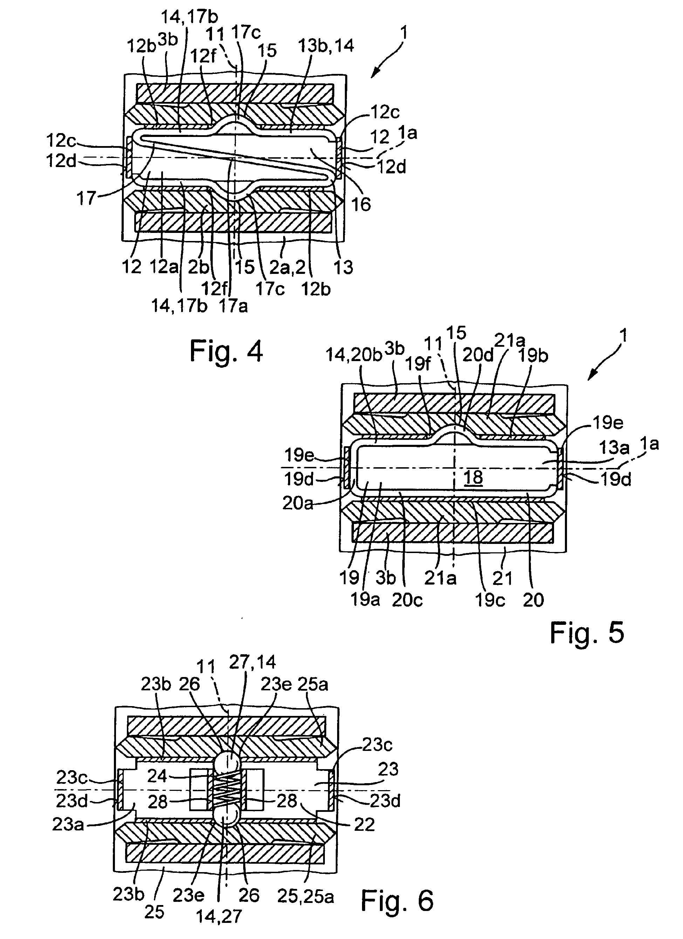

Figur 4 zeigt mit dem Druckstück 16 ein weiteres Ausführungsbeispiel der Erfindung. Das Druckstück 16 ist aus dem schon beschriebenen Gehäuse 12 und einer Druckfeder 17 gebildet. Die Druckfeder 17 weist zwei Schenkel 17b auf. Die Schenkel 17b sind mittels eines Steges 17a miteinander verbunden, der in der nach Figur 4 gezeigten Schnittebene diagonal zu dem Gehäuse 12 ausgerichtet ist. Jeder der Schenkel 17b ist ein Rastelement 14 und weist einen von dem Schenkel 17b tangential zur Kreisbahn 11 ausgerichtet abgehenden Bogen 17c auf, mit dem der Schenkel 17b einen der Durchbrüche 12f durchgreift. Die Rastelemente 14 stehen somit an den voneinander abgewandten Seiten des Druckstückes 16 aus dem Gehäuse 12 hervor. Die Schenkel 17b sind in der nach Figur 4 gezeigten Schnittebene bestrebt, voneinander weg aufzuspreizen und spannen den Bogen 17c somit in die zu der Kreisbahn 11 tangentiale Richtung gegen einen der Zähne 2b der Schaltmuffe 2 vor. Die Bögen 17c sind dabei in der nach Figur 4 gezeigten Position der Schaltmuffe 2 in die Rastvertiefung 15 eingerastet.

Figur 5 zeigt mit dem Druckstück 18 ein weiteres Ausführungsbeispiel der Erfindung. Das Druckstück 18 weist ein Gehäuse 19 auf, das aus Blech geformt und das mit einem flachen Boden 19a und Seitenwänden 19b, 19c und 19e versehen ist. Die Seitenwände 19b, 19c und 19e sind von dem Boden 19a abgewinkelt. Die quer zu der Verlaufsrichtung der Rotationsachse 1a ausgerichteten Seitenwände 19e weisen jeweils eine Planfläche 19d für den Kontakt des Druckstückes 18 mit einem Synchronring auf. Die eine Seitenwand 19b der beiden quer zu der Kreisbahn 11 ausgerichteten der Seitenwände 19b, 19c ist mit einem Durchbruch 19f versehen. In dem Druckstück 18 ist eine Druckfeder 20 aufgenommen. Die Druckfeder 20 ist mit Schenkeln 20b und 20c versehen. Die Schenkel 20b und 20c sind mittels eines Steges 20a miteinander verbunden. Der Steg 20a ist in der nach Figur 5 gezeigten Ebene des Druckstückes 18 quer zur Rotationsachse 1a ausgerichtet. Der Schenkel 20b ist ein Rastelement 14 und weist einen von dem Schenkel 20b tangential zur Kreisbahn 11 ausgerichtet abgehenden Bogen 20d auf, mit dem der Schenkel 20b einen der Durchbrüche 19f durchgreift. Das Rastelement 14 steht somit an einer der in die tangentiale Richtung weisenden Seiten des Druckstückes 18 mit dem Bogen 20d aus dem Gehäuse 19 hervor. Die Schenkel 20b und 20c sind in der nach Figur 5 gezeigten Schnittebene bestrebt, voneinander weg aufzuspreizen und spannen das Rastelement 14 somit in eine zu der Kreisbahn 11 tangentiale Richtung gegen einen der Zähne 21 a einer nicht weiter dargestellten Verzahnung einer Schaltmuffe 21 vor. Dabei ist das Rastelement 14 in eine Rastvertiefung 15 an dem Zahn 21 a eingerastet. Der Schenkel 20c stützt sich in dem Gehäuse 19 ab, wodurch das Gehäuse 19 durch die Vorspannung der Druckfeder 20 mit der Seitenwand 19c gegen einen weiteren Zahn 21 a der Schaltmuffe 21 vorgespannt ist.

Figur 6 zeigt mit dem Druckstück 22 ein weiteres Ausführungsbeispiel der Erfindung. Das Druckstück 22 weist ein Gehäuse 23 und Rastelemente 14 in Form von Kugeln 27 auf. Das Gehäuse 23 ist aus Blech geformt und mit einem Boden 23a und Seitenwänden 23b und 23c versehen. An den Seitenwände 23c ist jeweils eine Planfläche 23d für den Kontakt des Druckstückes 22 mit einem äußeren Synchronring ausgebildet. In die quer zu der Kreisbahn 11 ausgerichteten Seitenwände 23b sind Durchbrüche 23e eingebracht. Die Rastelemente 14 sind mittels einer als Druckfeder ausgelegten Schraubenfeder 24 in entgegengesetzte Richtung zueinander gegen Zähne 25a einer Schaltmuffe 25 vorgespannt und dabei in der nach Figur 6 gezeigten Position der Schaltmuffe 25 jeweils in eine Rastvertiefung 26 eingerastet. Die Schraubenfeder 24 ist mit ihrer Federachse tangential zu der Kreisbahn 11 ausgerichtet und mittels zwei die Schraubenfeder 24 zwischen sich nehmenden sowie an dem Boden 23a befestigten Führungen 28 in ihrer Lage gehalten. Während der Handhabung der fertigen Druckstücke 22 vor der Montage in die Schaltkupplungseinheit 1 sind die Kugeln 27 gegen die Vorspannung der Schraubenfeder 24 an den Durchbrüchen 23e in dem Gehäuse 23 gehalten. Der Durchmesser oder der engste freie Querschnitt der Durchbrüche 23e ist deshalb kleiner als der Durchmesser der jeweiligen Kugel 27 die an dem jeweiligen Durchbruch 23e gehalten ist.

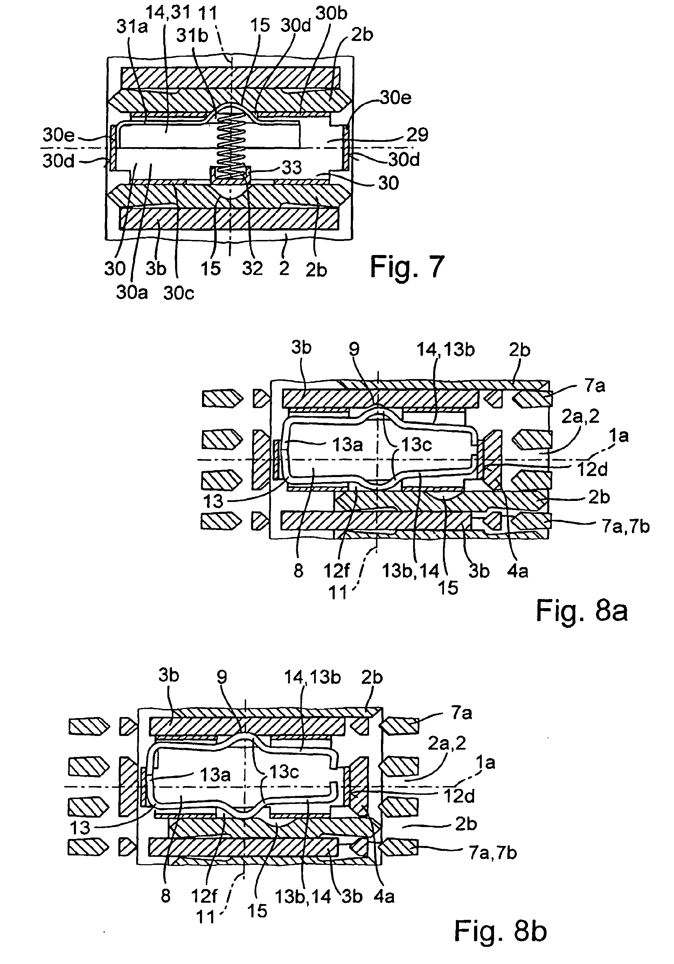

Figur 7 zeigt mit dem Druckstück 29 ein weiteres Ausführungsbeispiel der Erfindung. Das Druckstück 29 weist ein Gehäuse 30 auf, das aus Blech geformt und das mit einem Boden 30a und Seitenwänden 30b, 30c und 30e versehen ist. Die eine Seitenwand 30b der beiden quer zu der Kreisbahn 11 ausgerichteten Seitenwände 30b, 30c ist mit einem Durchbruch 30d versehen. In dem Druckstück 29 ist ein Rastelement 14 in Form eines Blechformteiles 31 aufgenommen. Das Blechformteil 31 ist mit einer in dem Gehäuse 30 aufgenommenen und gehaltenen sowie quer zur Kreisbahn 11 ausgerichteten Basis 31 a versehen. Von der Basis 31 a geht eine tangential zu dem Kreisbogen 11 ausgerichtete sowie aus dem Gehäuse 30 durch den Durchbruch 30d ragende Auswölbung 31 b ab. Eine Schraubenfeder 32 spannt das Rastelement 14 somit in eine zu der Kreisbahn 11 tangentiale Richtung gegen einen der Zähne 2b der Schaltmuffe 2 vor. Das Rastelement 14 ist dabei in der nach Figur 7 gezeigten Position in einer der Rastvertiefungen 15 der Schaltmuffe 2 eingerastet. Die Schraubenfeder 32 stützt sich in dem Gehäuse 30 ab, wodurch das Gehäuse 30 durch die Vorspannung der Druckfeder 32 mit der Seitenwand 30c gegen einen weiteren Zahn 2b der Schaltmuffe 2 vorgespannt ist. Die Schraubenfeder 32 ist seitlich in einer einteilig mit der Seitenwand 13c ausgebildeten und durch Stanzen sowie Durchstellen erzeugten Führung 33 geführt.

Die Figuren 8a und 8b zeigen das Druckstück 8 in einer Anwendung, in der eines der Rastelemente 14 zumindest zeitweise in der Rastvertiefung 15 an einem der Zähne 2b der Schaltmuffe 2 und das andere der Rastelemente 14, zeitgleich mit dem vorher genannten Rastelement oder zeitversetzt zu diesem, in eine Rastausnehmung 9 an einem der Zähne 3b der Gegenverzahnung 3a an dem Schaltmuffenträger 3 eingerastet ist. Das Druckstück 8 ist in der Anwendung mit einer Doppelfunktion versehen. Zunächst arretiert das Druckstück 8 die Schaltmuffe 2 in einer nicht bildlich dargestellten neutralen Position, in der keines der Gangräder geschaltet ist. Das Druckstück 8 ist dazu mittels eines in die Rastausnehmung 9 eingerasteten der Rastelemente 14 längs an der Rastausnehmung 9 arretiert. Zeitgleich dazu ist die Schaltmuffe 2 mittels des anderen in der Rastvertiefung 15 eingerasteten der Rastelemente 14 über das an dem Schaltmuffenträger verrastete Druckstück 8 längs zu dem Schaltmuffenträger 3 gehalten.

Bei einer Schaltbewegung an der Schaltmuffe 2 längs in eine der Verlaufsrichtungen der Rotationsachse 1a zum Schalten eines der Gangräder nimmt die Schaltmuffe 2 das Druckstück 8 über das in der Rastvertiefung 15 eingerastete Rastelement 14 zunächst längs mit. Die mit der Schaltbewegung an der Schaltmuffe 2 erzeugte Kraft zwingt gleichzeitig das in der Rastausnehmung 9 verrastete Rastelement 14 gegen die Vorspannung des betreffenden Schenkels 13b zum Ausweichen in Richtung des Druckstückes 8 bzw. zum Ausweichen in das/dem Druckstück 8. Der betroffene Bogen 13c rastet aus der Rastausnehmung 9 aus. Das vorzeitige Ausrasten des Rastelementes 14 aus der Rastausnehmung 9 im Vergleich zu dem in der Rastvertiefung 15 in diesem Moment weiterhin verrasteten Rastelement 14 ist möglich, da die Rastausnehmung 9 in der tangentialen Richtung flacher als die Rastvertiefung 15 ausgebildet ist. Das Druckstück 8 trifft im weiteren Verlauf der Schaltbewegung mit seiner dem zu schaltenden Gangrad zugewandten Planfläche 12d auf den Anschlag 4a an dem äußeren Synchronring 4. Das Druckstück 8 ist durch den auf dem Zwischenring 5 auflaufenden äußeren Synchronring 4 an dem Anschlag 4a in seiner Bewegung längs zur Rotationsachse 1 a schließlich gestoppt.

Die Schaltmuffe 2 bewegt sich weiter in Richtung des Kupplungskörpers 7, bis die Zähne 2b beginnen in die Kupplungsverzahnung 7a einzuspuren. Das in der Rastausnehmung 15 verrastete Rastelement 14 ist durch die sich weiter bewegende Schaltmuffe 2 sowie gegen die Vorspannung des betreffenden Schenkels 13b zum Ausweichen in Richtung des Druckstückes 8 bzw. zum Ausweichen in das/dem Druckstück 8 gezwungen. Der betroffene Bogen 13c ist dadurch schließlich, wie in Figur 8a dargestellt, aus der Rastvertiefung 15 ausgerastet. Die Verzahnung 2a ist in dieser Position der Schaltmuffe 2 in die Kupplungsverzahnung 7a eingespurt und das betreffende Gangrad geschaltet. Die Rastelemente 14 mit den Bögen 13c sind dabei weiter gegen die Schaltmuffe 2 vorgespannt.

Die in Figur 8b dargestellte Position erreicht die Schaltmuffe 2 bei einem Gangwechsel, wenn sich die Schaltmuffe in Richtung ihrer neutralen Position von dem geschalteten Gangrad weg zurück bewegt. Der Schenkel 13b federt wieder auf, wenn die Rastausnehmung 9 in radialer Richtung über dem betroffen Bogen 13c steht. Das Rastelement 14 rastet dann zeitversetzt zu dem anderen Rastelement 14 wieder in die Rastausnehmung 9 ein und arretiert das Druckstück 8 an dem Schaltmuffenträger 3.

Bei einer Schaltbewegung der Schaltmuffe 2 längs über die Position nach Figur 8b hinaus, federn die Schenkel 13b wieder auf, wenn die Rastvertiefungen 15 auf die Bögen 13c treffen. Die Rastelemente 14 rasten wieder in die Rastvertiefungen 15 ein. Die Schaltmuffe 2 steht wieder in der neutralen Position.

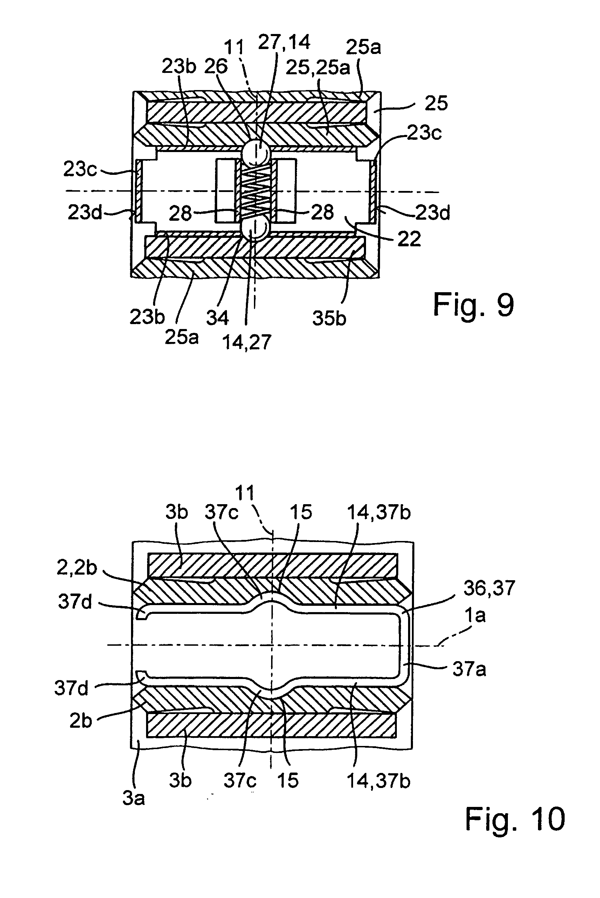

Die Figur 9 zeigt das Druckstück 22 in einer Anwendung, in der eines als Kugel 27 ausgebildetes der Rastelemente 14 zumindest zeitweise in der Rastvertiefung 26 an einem der Zähne 25a der Schaltmuffe 25 und das andere der als Kugel 27 ausgebildetes des Rastelemente 14, zeitgleich mit dem vorher genannten Rastelement 14 oder zeitversetzt zu diesem, in eine Rastausnehmung 34 an einem der Zähne 35b der Gegenverzahnung 35a an einem Schaltmuffenträger 35 eingerastet ist. Das Druckstück 22 ist wie in der vorher mit den Figuren 8a und 8b dargestellten Anwendung mit der Doppelfunktion versehen.

Figur 10 zeigt ein Druckstück 36, bei dem das Druckstück 36 und die Rastelemente 14 gemeinsam an einer bügelförmige Druckfeder 37 mit zwei Schenkeln 37b gebildet sind. Beide der Schenkel 37b sind in die zur Kreisbahn 11 tangentialen Richtungen gegen die Schaltmuffe 2 vorgespannt. Jeder der Schenkel 37b ist zumindest zeitweise in jeweils einer der Rastvertiefungen 15 an den Zähnen 2b der Innenverzahnung 2a eingerastet. Denkbar ist auch, das in der schon beschriebenen Weise einer der Schenkel 37b zumindest zeitweise in einer der Rastvertiefungen 15 an einem der Zähne 2b der Innenverzahnung 2a eingerastet und der andere, zeitgleich mit dem anderen der Schenkel 37b oder zeitversetzt zu diesem, in eine der Rastausnehmungen 9 an einem der Zähne 3b des Schaltmuffenträgers 3 verrastet ist. Die Druckfeder 37 weist einen quer zu den Verlaufsrichtungen der Rotationsachse 1 a ausgerichteten Steg 37a auf. Jeder der Schenkel 37b geht gleichgerichtet zu dem anderen der Schenkel 37b abgewinkelt von dem Steg 37a ab und weist dann in seinem weiteren Verlauf einen zu der Rastvertiefung 15 bzw. zu der Rastausnehmung 9 gerichteten Bogen 37c auf, um dann schließlich mit seinem freien Ende 37d wieder in die Verlaufsrichtung zu weisen. Die Enden 37d sind leicht aufeinander zu gekrümmt ausgeführt.

### Bezugszeichen

- 1: Schaltkupplungseinheit
- 1a: Rotationsachse
- 2: Schaltmuffe
- 2a: Innenverzahnung
- 2b: Zahn
- 3: Schaltmuffenträger
- 3a: Gegenverzahnung
- 3b: Zahn
- 3c: Keilprofil
- 4: Synchronring
- 4a: Anschlag
- 4b: Reibfläche
- 5: Synchronring
- 5a: Reibfläche
- 6: Synchronring
- 7: Kupplungskörper
- 7a: Kupplungsverzahnung
- 8: Druckstück
- 9: Rastausnehmung
- 10: Lücke
- 11: Kreisbahn
- 12: Gehäuse
- 12a: Boden
- 12b: Seitenwand
- 12c: Seitenwand
- 12d: Planfläche
- 12e: Wandabschnitt
- 12f: Durchbruch
- 13: Druckfeder
- 13a: Steg
- 13b: Schenkel
- 13c: Bogen
- 14: Rastelement
- 15: Rastvertiefung
- 16: Druckstück
- 17: Druckfeder
- 17a: Steg
- 17b: Schenkel
- 17c: Bogen
- 18: Druckstück
- 19: Gehäuse
- 19a: Boden
- 19b: Seitenwand
- 19c: Seitenwand
- 19d: Planfläche
- 19e: Seitenwand
- 19f: Durchbruch
- 20: Druckfeder
- 20a: Steg
- 20b: Schenkel
- 20c: Schenkel
- 20d: Bogen
- 21: Schaltmuffe
- 21a: Zahn
- 22: Druckstück
- 23: Gehäuse
- 23a: Boden
- 23b: Seitenwand
- 23c: Seitenwand
- 23d: Planfläche
- 23e: Durchbruch
- 24: Schraubenfeder
- 25: Schaltmuffe
- 25a: Zahn
- 26: Rastvertiefung
- 27: Kugel
- 28: Führung
- 29: Druckstück
- 30: Gehäuse
- 30a: Boden
- 30b: Seitenwand
- 30c: Seitenwand
- 30d: Planfläche
- 30e: Seitenwand
- 30f: Durchbruch
- 31: Blechformteil
- 31a: Basis
- 31b: Auswölbung
- 32: Schraubenfeder
- 33: Führung
- 34: Rastausnehmung
- 35: Schaltmuffenträger
- 35a: Gegenverzahnung
- 35b: Zahn
- 36: Druckstück
- 37: Druckfeder
- 37a: Steg
- 37b: Schenkel
- 37c: Bogen
- 37d: Ende

## Patentansprüche

1. Schaltkupplungseinheit, zumindest bestehend aus einem Schaltmuffenträger (3, 35), einer Schaltmuffe (2, 21, 25) und einem Druckstück (8, 16, 18, 22, 29, 36) mit wenigstens einem Rastelement (14), wobei das Druckstück (8, 18, 18, 22, 29, 36) radial zwischen der auf dem Schaltmuffenträger (3, 35) verdrehfest sitzenden Schaltmuffe (2, 21, 25) und dem um eine Rotationsachse (1 a) rotierbaren Schaltmuffenträger (3, 35) angeordnet sowie das Druckstück (8, 16, 18, 22, 29, 36) auf einer gedachten Kreisbahn (11) um die Rotationsachse (1 a) bewegbar ist und wobei das Rastelement (14) (8, 16, 18, 22, 29, 36) elastisch einfederbar gegen die Schaltmuffe (2, 21, 25) elastisch vorspannt und dabei das Rastelement (14) in einer Rastvertiefung (15, 26) der Schaltmuffe (2, 21) verrastbar ist, wodurch das Druckstück (8, 16, 18, 22, 29, 36) über das in der Rastvertiefung (15, 26) verrastete Rastelement (14) mit der Schaltmuffe relativ zu dem Schaltmuffenträger (3, 35) längs der Rotationsachse (1 a) bewegbar ist, **gekennzeichnet durch** ein das Rastelement (14) zumindest teilweise aufnehmendes Gehäuse (12, 19, 23, 30), wobei das Rastelement (14) zumindest an einer der Rastvertiefungen (15, 26) zugewandten Seite des Druckstückes (8, 16, 18, 22, 29, 36) in eine tangentiale Richtung zu der Kreisbahn (11) wenigstens teilweise aus dem Gehäuse (12, 19, 23, 30) hervorsteht, wodurch das Rastelement (14) in die tangentiale Richtung gegen die Schaltmuffe (2, 21, 25) elastisch vorspannbar ist sowie dabei in der dem Druckstück (8, 16, 18, 22, 29, 36) gegenüberliegenden Rastvertiefung (15, 26) verrastbar ist.

2. Schaltkupplungseinheit nach Anspruch 1, **dadurch gekennzeichnet, dass** das Rastelement (14) in die tangentiale Richtung mittels einer sich an dem Gehäuse (23) abstützenden Schraubenfeder (24) vorgespannt ist.

3. Schaltkupplungseinheit nach Anspruch 1, **gekennzeichnet durch** zwei der Rastelemente (14), wobei eines der Rastelemente (14) in die tangentiale Richtung gegen die Schaltmuffe (2, 25) an einer ersten Seite von zwei einander abgewandten Seiten des Druckstückes (8, 16, 22) aus dem Druckstück (8, 16, 22) hervorsteht und das andere Rastelement (14) in eine entgegengesetzte Richtung zu der tangentialen Richtung vorgespannt an einer zweiten Seite der Seiten des Druckstückes (8, 16, 22) hervorsteht und wobei jedes der Rastelemente (14) zumindest zeitweise in jeweils einer von zwei der Rastvertiefungen (15, 26) an der Schaltmuffe (2, 25) eingerastet ist.

4. Schaltkupplungseinheit nach Anspruch 1, **gekennzeichnet durch** zwei Rastelemente (14), wobei eines der Rastelemente (14) in die tangentiale Richtung gegen die Schaltmuffe (2, 25) vorgespannt an einer ersten Seite von zwei einander abgewandten Seiten des Druckstückes (8, 22) aus dem Druckstück (8, 22) hervorsteht und zumindest zeitweise in der Rastvertiefung (15, 26) an der Schaltmuffe (2, 25) verrastet ist und wobei das andere der Rastelemente (14) in eine zu der tangentialen Richtung entgegengesetzte Richtung vorgespannt an einer zweiten Seite der Seiten des Druckstückes (8, 22) hervorsteht und zumindest zeitweise in einer Rastausnehmung (9, 34) an dem Schaltmuffenträger (3, 35) verrastet ist.

5. Schaltkupplungseinheit nach Anspruch 3 oder 4, **dadurch gekennzeichnet, dass** die Rastelemente (14) mittels einer Schraubenfeder tangential vorgespannt sind.

6. Schaltkupplungseinheit nach Anspruch 2, 3 oder 4, **dadurch gekennzeichnet, dass** das Rastelement (14) eine Kugel (27) ist.

7. Schaltkupplungseinheit nach Anspruch 2, 3 oder 4, **dadurch gekennzeichnet, dass** das Rastelement (14) ein Blechformteil (31) ist, wobei das Blechformteil (31) mit einer in dem Gehäuse (30) aufgenommenen sowie gehaltenen und zu der Rotationsachse (1a) parallel ausgerichteten Basis (31 a) und einer von der Basis (31 a) abgehenden sowie aus dem Gehäuse (30) in die tangentiale Richtung ragenden Auswölbung (31 b) versehen ist.

8. Schaltkupplungseinheit nach Anspruch 1, **dadurch gekennzeichnet, dass** das Rastelement (14) aus mindestens einer in die tangentiale Richtung vorspannenden bügelförmigen Druckfeder (13, 17, 20) gebildet ist, wobei die Druckfeder (13, 17, 20) teilweise aus dem Gehäuse (12, 19) ragt und zumindest zeitweise in der Rastvertiefung (15) verrastet ist.

9. Schaltkupplungseinheit nach Anspruch 8, **dadurch gekennzeichnet, dass** die Druckfeder (20) zwei Schenkel (20b, 20c) aufweist, wobei einer der Schenkel (20b) mit einem in die tangentiale Richtung hervorstehenden Bogen (20d) gegen die Schaltmuffe (21) vorgespannt ist und dabei mit dem Bogen (20d) zumindest zeitweise in der Rastvertiefung (15) verrastet ist und wobei der andere der Schenkel (20c) sich an dem Gehäuse (19) abstützt.

10. Schaltkupplungseinheit nach Anspruch 8, **dadurch gekennzeichnet, dass** die Druckfeder (13, 17) zwei Schenkel (13b, 17b) aufweist, wobei die Schenkel (13b, 17b) mit einem Steg (13a, 17a) der Druckfeder (13, 17) miteinander verbunden sind und dass einer der Schenkel (13, 17) in die tangentiale Richtung gegen die Schaltmuffe (2, 25) vorgespannt, an einer ersten Seite von zwei einander abgewandten Seiten des Druckstückes (8, 16) aus dem Druckstück (8, 16) hervorsteht und der andere der Schenkel (13b, 17b) in eine zu der tangentialen Richtung entgegengesetzte Richtung gegen die Schaltmuffe (2, 25) vorgespannt an einer zweiten Seite der Seiten des Druckstückes (8, 16) hervorsteht und wobei jeder der Schenkel (13b, 17b) zumindest zeitweise in jeweils einer von zwei der Rastvertiefungen (15) an der Schaltmuffe (2, 25) verrastet ist.

11. Schaltkupplungseinheit nach Anspruch 8, **dadurch gekennzeichnet, dass** die Druckfeder (13) zwei Schenkel (13b) aufweist, wobei die Schenkel (13b) mit einem Steg (13a) miteinander verbunden sind und dass einer der Schenkel (13b) in die tangentiale Richtung gegen die Schaltmuffe (2) vorgespannt an einer ersten Seiten von zwei einander abgewandten Seiten des Druckstückes (8) aus dem Druckstück (8) hervorsteht und dabei zumindest zeitweise in der Rastvertiefung (15) an der Schaltmuffe (2) verrastet ist und wobei der andere der Schenkel (13b) in eine zu der tangentialen Richtung entgegengesetzte tangentiale Richtung gegen den Schaltmuffenträger (3) vorgespannt an einer zweiten Seite der voneinander abgewandten Seiten des Druckstückes (8) hervorsteht und dabei zumindest zeitweise in einer Rastausnehmung (9) an dem Schaltmuffenträger (3) verrastet ist.

12. Schaltkupplungseinheit nach Anspruch 10 oder 11, **dadurch gekennzeichnet, dass** der Steg (13a) quer zur Rotationsachse (1 a) ausgerichtet verläuft.

13. Schaltkupplungseinheit nach Anspruch 1, **dadurch gekennzeichnet, dass** das Druckstück (8, 16, 18, 22, 29) ein aus Blech geformtes Gehäuse (12, 19, 23, 30) aufweist, wobei die der Rastvertiefung (15) zugewandte Seite des Gehäuses (12, 19, 23, 30) einen von dem Rastelement (14) durchgriffenen Durchbruch (12f, 19f, 23e, 30f) aufweist und wobei das Gehäuse (12, 19, 23, 30) zumindest mit einer längs in eine der Verlaufsrichtungen der Rotationsachse (1 a) weisenden Planfläche (12d, 19d, 23d, 30d) versehen ist.

14. Schaltkupplungseinheit nach dem Oberbegriff des Anspruchs 1, **dadurch gekennzeichnet, dass** das Druckstück (36) und das Rastelement (14) gemeinsam sowie einteilig an einer bügelförmigen Druckfeder (37) mit zwei Schenkeln (37b) ausgebildet sind.

15. Schaltkupplungseinheit nach Anspruch 14, **dadurch gekennzeichnet, dass** einer der Schenkel (37b) in eine zu der Kreisbahn (11) tangentiale Richtung gegen die Schaltmuffe (2) vorgespannt ist und dass der andere der Schenkel (37b) in eine zu der tangentialen Richtung entgegengesetzte tangentiale Richtung gegen die Schaltmuffe (2) vorgespannt ist und wobei jeder der Schenkel (37b) zumindest zeitweise in jeweils einer von zwei der Rastvertiefungen (15) an der Schaltmuffe (2) verrastet ist.

16. Schaltkupplungseinheit nach Anspruch 14, **dadurch gekennzeichnet, dass** die Druckfeder (37) einen quer zu den Verlaufsrichtungen der Rotationsachse (1a) ausgerichteten und die Schenkel (37b) verbindenden Steg (37a) aufweist, wobei jeder der Schenkel (37b) gleichgerichtet mit dem anderen der Schenkel (37b) zunächst in eine der Verlaufsrichtungen der Rotationsachse (1a) von dem Steg (37a) abgewinkelt abgeht und dann in seinem weiteren Verlauf einen in Richtung der Rastvertiefung (15) ausgeformten Bogen (37c) aufweist und schließlich mit seinem freien Ende (37d) wieder in die Verlaufsrichtung weist.

17. Schaltkupplungseinheit nach Anspruch 16, **dadurch gekennzeichnet, dass** die Enden (37d) der Druckfeder (37) aufeinander zugekrümmt sind.

## Claims

1. Gearshift clutch unit consisting of at least one gearshift sleeve carrier (3, 35), one gearshift sleeve (2, 21, 25) and one thrust member (8, 16, 18, 22, 29, 36) comprising at least one detent element (14), said thrust member (8, 16, 18, 22, 29, 36) being arranged radially between the gearshift sleeve (2, 21, 25), that is seated secured against rotation on the gearshift sleeve carrier (3, 35), and the gearshift sleeve carrier (3, 35) that is capable of rotating about an axis of rotation (1 a), said thrust member (8, 16, 18, 22, 29, 36) further being displaceable in an imaginary orbit (11) about the axis of rotation (1 a), the detent element (14) being able to yield elastically while biasing elastically against the gearshift sleeve (2, 21, 25) and said detent element (14) further being capable of snapping into a catch depression (15, 26) of the gearshift sleeve (2, 21), said thrust member (8, 16, 18, 22, 29, 36) thus being enabled by the detent element (14) snapped into the catch depression (15, 26) to move together with the gearshift sleeve relative to the gearshift carrier (3, 35) along the axis of rotation (1 a), **characterised by** a housing (12, 19, 23, 30) that receives the detent element (14) at least partially, the detent element (14) projecting at least partially out of the housing (12, 19, 23, 30) in a tangential direction to the orbit (11) at least on one side of the thrust member (8, 16, 18, 22, 29, 36) facing the catch depressions (15, 26), the detent element (14) thus being enabled to be biased elastically against the gearshift sleeve (2, 21, 25) in the tangential direction and to snap into the catch depression (15, 26) situated opposite the thrust member (8, 16, 18, 22, 29, 36).

2. Gearshift dutch unit according to claim 1, **characterised in that** the detent element (14) is biased in the tangential direction by means of a coiled spring (24) that is supported on the housing (23).

3. Gearshift clutch unit according to claim 1, **characterised by** two detent elements (14), one of which detent elements (14) projects out of the thrust member (8, 16, 22) in the tangential direction against the gearshift sleeve (2, 25) on a first of two sides of the thrust member (8, 16, 22) turned away from each other, and the other detent element (14) biased in a direction opposite to the tangential direction projects on a second one of the sides of the thrust member (8, 16, 22), each of the detent elements (14) being snapped at least intermittently into one of two catch depressions (15, 26) on the gearshift sleeve (2, 25).

4. Gearshift dutch unit according to claim 1, **characterised by** two detent elements (14), one of which detent elements (14) biased in the tangential direction against the gearshift sleeve (2, 25) projects out of the thrust member (8, 22) on a first of two sides of the thrust member (8, 22) turned away from each other, while being snapped at least intermittently into the catch depression (15, 26) on the gearshift sleeve (2, 25), and the other detent element (14) biased in a direction opposite to the tangential direction projects on a second one of the sides of the thrust member (8, 22), while being snapped at least intermittently into a catch recess (9, 34) on the gearshift sleeve carrier (3, 35).

5. Gearshift clutch unit according to claim 3 or 4, **characterised in that** the detent elements (14) are biased tangentially by means of a coiled spring.

6. Gearshift clutch unit according to claim 2, 3 or 4, **characterised in that** the detent element (14) is a ball (27).

7. Gearshift clutch unit according to daim 2, 3 or 4, **characterised in that** the detent element (14) is a shaped sheet metal part (31) and this shaped sheet metal part (31) comprises a base (31 a) that is received and retained in the housing (30) while being oriented in parallel direction to the axis of rotation (1 a), said sheet metal part (31) further comprising a vaulted portion (31 b) that starts from the base (31 a) and projects in the tangential direction out of the housing (30).

8. Gearshift clutch unit according to claim 1, **characterised in that** the detent element (14) is constituted by at least one U-shaped compression spring (13, 17, 20) that biases in the tangential direction, and this compression spring (13, 17, 20) projects partially out of the housing (12, 19) and is snapped at least intermittently into the catch depression (15).

9. Gearshift clutch unit according to claim 8, **characterised in that** the compression spring (20) comprises two legs (20b, 20c), one of which legs (20b) is biased against the gearshift sleeve (21) through an arch (20d) protruding in the tangential direction, said leg (20b) being snapped at least intermittently into the catch depression (15) with this arch (20d), and the other leg (20c) being supported on the housing (19).

10. Gearshift clutch unit according to daim 8, **characterised in that** the compression spring (13, 17) comprises two legs (13b, 17b), said legs (13b, 17b) being connected to each other through a web (13a, 17a) of the compression spring (13, 17), one of the legs (13b, 17b), biased in the tangential direction against the gearshift sleeve (2, 25), projects out of the thrust member (8, 16) on a first of two sides of the thrust member (8, 16) that are turned away from each other, and the other one of the legs (13b, 17b) biased in a direction opposite to the tangential direction against the gearshift sleeve (2, 25) protrudes on a second one of the sides of the thrust member (8, 16), and each of the legs (13b, 17b) being snapped at least intermittently into one of two catch depressions (15) on the gearshift sleeve (2, 25).

11. Gearshift dutch unit according to claim 8, **characterised in that** the compression spring (13) comprises two legs (13b), said legs (13b) being connected to each other through a web (13a), one of the legs (13b), biased in the tangential direction against the gearshift sleeve (2), projects out of the thrust member (8) on a first of two sides of the thrust member (8) that are turned away from each other, said leg (13b) being snapped at least intermittently into the catch depression (15) on the gearshift sleeve (2), and the other one of the legs (13b) biased in a tangential direction opposite to the tangential direction against the gearshift sleeve carrier (3) protrudes on a second one of the sides of the thrust member (8) that are turned away from each other, while being snapped at least intermittently into a catch recess (9) on the gearshift sleeve carrier (3).

12. Gearshift dutch unit according to claim 10 or 11, **characterised in that** the web (13a) is oriented crosswise to the axis of rotation (1a).

13. Gearshift dutch unit according to claim 1, **characterised in that** the thrust member (8, 16, 18, 22, 29) comprises a housing (12, 19, 23, 30) shaped out of sheet metal, the side of the housing (12, 19, 23, 30) turned towards the catch depression (15) comprises an aperture (12f, 19f, 23e, 30f) through which the detent element (14) engages, and the housing (12, 19, 23, 30) comprises at least one flat surface (12d, 19d, 23d, 30d) that is oriented in longitudinal direction in one of the running directions of the axis of rotation (1a).

14. Gearshift dutch unit according to the preamble of claim 1, **characterised in that** the thrust member (36) and the detent element (14) are formed together and in one piece with a U-shaped compression spring (37) having two legs (37b).

15. Gearshift clutch unit according to daim 14, **characterised in that** one of the legs (37b) is biased against the gearshift sleeve (2) in a direction tangential to the orbit (11), and the other one of the legs (37b) is biased against the gearshift sleeve (2) in a tangential direction opposite to the tangential direction, each of the legs (37b) being snapped at least intermittently into one of two catch depressions (15) on the gearshift sleeve (2).

16. Gearshift clutch unit according to claim 14, **characterised in that** the compression spring (37) comprises a web (37a) that connects the legs (37b) to each other and is oriented crosswise to the running directions of the axis of rotation (1 a), the legs (37b) are parallel to each other and each leg (37b) starts at first at an angle from the web (37a) in one of the running directions of the axis of rotation (1a), and in its further course, each leg (37b) comprises an arch (37c) formed towards the catch depression (15), each leg (37b) finally pointing with its free end (37d) again in the running direction.

17. Gearshift dutch unit according to claim 16, **characterised in that** the ends (37d) of the compression spring (37) are curved towards each other.

## Revendications

1. Ensemble d'embrayage comprenant au moins un support de manchon de changement de vitesse (3, 35), un manchon de changement de vitesse (2, 21, 25) et un membre de la poussée (8, 16, 18, 22, 29, 36) ayant au moins un élément d'arrêt (14), le membre de la poussée (8, 16, 18, 22, 29, 36) étant agencé radialement entre le manchon de changement de vitesse (2, 21, 25), qui est immobilisé en rotation sur le support (3, 35) de manchon de changement de vitesse, et le support (3, 35) de manchon de changement de vitesse qui peut tourner autour d'un axe de rotation (1a), le membre de la poussée (8, 16, 18, 22, 29, 36) étant, en plus, mobile dans une orbite (11) imaginaire autour de l'axe de rotation (1a), et l'élément d'arrêt (14) étant précontraint élastiquement contre le manchon de changement de vitesse (2, 21, 25) en pouvant fléchir élastiquement, de sorte que l'élément d'arrêt (14) peut s'enclencher dans une cavité d'arrêt (15, 26) et le membre de la poussée (8, 16, 18, 22, 29, 36) peut être déplacé avec le manchon de changement de vitesse par rapport au support (3, 35) de manchon de changement de vitesse le long de l'axe de rotation (1a) grâce à l'élément d'arrêt (14) enclenché dans la cavité d'arrêt, **caractérisé par** un boîtier (12, 19, 23, 30) qui reçoit l'élément d'arrêt (14), au moins partiellement, l'élément d'arrêt (14) faisant au moins partiellement saillie à partir du boîtier (12, 19, 23, 30) dans une direction tangentielle à l'orbite (11) sur au moins un côté du membre de la poussée (8, 16, 18, 22, 29, 36) qui fait face aux cavités d'arrêt (15, 26), de sorte que l'élément d'arrêt (14) peut être précontraint élastiquement dans la direction tangentielle contre le manchon de changement de vitesse (2, 21, 25) en pouvant être endiqueté dans la cavité d'arrêt (15, 26) située vis-à-vis du membre de la poussée (8, 16, 18, 22, 29, 36).

2. Ensemble d'embrayage selon la revendication 1, **caractérisé en ce que** l'élément d'arrêt (14) est précontraint dans la direction tangentielle par l'intermédiaire d'un ressort à boudin (24) qui s'appuie sur le boîtier (23).

3. Ensemble d'embrayage selon la revendication 1, **caractérisé par** deux éléments d'arrêt (14), l'un de ces éléments d'arrêt (14) faisant saillie à partir du membre de la poussée (8, 16, 22) dans la direction tangentielle contre le manchon de changement de vitesse (2, 25) sur un premier de deux côtés du membre de la poussée (8, 16, 22) qui sont détournés, l'un de l'autre, et l'autre élément d'arrêt (14), précontraint dans une direction opposée à la direction tangentielle, faisant saillie sur un deuxième des deux côtés du membre de la poussée (8, 16, 22), et chacun des éléments d'arrêt (14) étant encliqueté, au moins de manière intermittente, dans une de deux cavités d'arrêt (15, 26) sur le manchon de changement de vitesse (2, 25).

4. Ensemble d'embrayage selon la revendication 1, **caractérisé par** deux éléments d'arrêt (14), l'un de ces éléments d'arrêt (14) qui est précontraint dans la direction tangentielle contre le manchon de changement de vitesse (2, 25) faisant saillie à partir du membre de la poussée (8, 22) sur un premier de deux côtés du membre de la poussée (8, 22) qui sont détournés, l'un de l'autre, ledit élément d'arrêt (14) étant encliqueté, au moins de manière intermittente, dans la cavité d'arrêt (15, 26) sur le manchon de changement de vitesse (2, 25), et l'autre élément d'arrêt (14) qui est précontraint dans une direction opposée à la direction tangentielle, faisant saillie sur un deuxième des deux côtés du membre de la poussée (8, 22), et cet autre élément d'arrêt (14) étant encliqueté, au moins de manière intermittente, dans un évidement d'arrêt (9, 34) sur le support (3, 35) de manchon de changement de vitesse.

5. Ensemble d'embrayage selon la revendication 3 ou 4, **caractérisé en ce que** les éléments d'arrêt (14) sont précontraints par l'intermédiaire d'un ressort à boudin.

6. Ensemble d'embrayage selon la revendication 2, 3 ou 4, **caractérisé en ce que** élément d'arrêt (14) est une bille (27).

7. Ensemble d'embrayage selon la revendication 2, 3, ou 4, **caractérisé en ce que** l'élément d'arrêt (14) est une pièce formée en tôle (31), cette pièce formée en tôle (31) étant munie d'une base (31a), qui est reçue et retenue dans le boîtier (30) en étant orientée parallèlement à l'axe de rotation (1a), et cette pièce formée en tôle (31) étant munie, en plus, d'un bombement (31 b) qui s'étend à partir de la base (31a) et fait saillie dans la direction tangentielle à partir du boîtier (30).

8. Ensemble d'embrayage selon la revendication 1, **caractérisé en ce que** l'élément d'arrêt (14) est formé par au moins un ressort de pression (13, 17, 20) en forme d'étrier qui précontraint dans la direction tangentielle, et ce ressort de pression (13, 17, 20) fait au moins partiellement saillie à partir du boîtier (12, 19) et est encliqueté, au moins de manière intermittente, dans la cavité d'arrêt (15).

9. Ensemble d'embrayage selon la revendication 8, **caractérisé en ce que** le ressort de pression (20) comprend deux bras (20b, 20c), et l'un des bras (20b) est précontraint contre le manchon de changement de vitesse (21) par un arc (20d) qui fait saillie dans la direction tangentielle, ledit bras (20b) étant endiqueté avec l'arc (20d), au moins de manière intermittente, dans la cavité d'arrêt (15) pendant que l'autre bras (20c) est supporté sur le boîtier (19).

10. Ensemble d'embrayage selon la revendication 8, **caractérisé en ce que** le ressort de pression (13, 17) comprend deux bras (13b, 17b), ces deux bras (13b, 17b) étant reliés, l'un à l'autre, par une entretoise (13a, 17a) du ressort de pression (13, 17), et **en ce que** l'un des bras (13b, 17b) qui est précontraint dans la direction tangentielle contre le manchon de changement de vitesse (2, 25), fait saillie à partir du membre de la poussée (8, 16) sur un premier de deux côtés du membre de la poussée (8, 16) qui sont détournés, l'un de l'autre, et l'autre des deux bras (13b, 17b) qui est précontraint dans une direction opposée à la direction tangentielle contre le manchon de changement de vitesse (2, 25), fait saillie sur un deuxième des deux côtés du membre de la poussée (8, 16), chacun des bras (13b, 17b) étant endiqueté, au moins de manière intermittente, dans l'une des cavités d'arrêt (15) sur le manchon de changement de vitesse (2, 25).

11. Ensemble d'embrayage selon la revendication 8, **caractérisé en ce que** le ressort de pression (13) comprend deux bras (13b), ces bras (13b) étant reliés, l'un à l'autre, par une entretoise (13a), et **en ce que** l'un des bras (13b) qui est précontraint dans la direction tangentielle contre le manchon de changement de vitesse (2), fait saillie à partir du membre de la poussée (8) sur un premier de deux côtés du membre de la poussée (8) qui sont détournés, l'un de l'autre, ledit bras (13b) étant encliqueté, au moins de manière intermittente, dans la cavité d'arrêt (15) sur le manchon de changement de vitesse (2) et l'autre des deux bras (13b) qui est précontraint dans une direction tangentielle opposée à la direction tangentielle contre le support (3) de manchon de changement de vitesse (2), fait saillie sur un deuxième des deux côtés du membre de la poussée (8), qui sont détournés, l'un de l'autre, et cet autre des bras (13b, 17b) étant endiqueté, au moins de manière intermittente, dans un évidement d'arrêt (9) sur le support (3) de manchon de changement de vitesse.

12. Ensemble d'embrayage selon la revendication 10 ou 11, **caractérisé en ce que** la entretoise (13a) est orientée en travers de l'axe de rotation (1a).

13. Ensemble d'embrayage selon la revendication 1, **caractérisé en ce que** le membre de la poussée (8, 16, 18, 22, 29) comprend un boîtier (12, 19, 23, 30) formé en tôle, le côté du boîtier (12, 19, 3, 24) tourné vers la cavité d'arrêt (15) comprend un perçage (12f, 19f, 23e, 30f) au travers duquel s'engage l'élément d'arrêt (14), et le boîtier (12, 19, 23, 30) est muni d'au moins une surface plane (12d, 19d, 23d, 30d) orientée en direction longitudinale dans l'une des directions d'allure de l'axe de rotation (1a).

14. Ensemble d'embrayage selon le préambule de la revendication 1, **caractérisé en ce que** le membre de la poussée (36) et l'élément d'arrêt (14) sont formés ensemble et en une seule pièce avec un ressort de pression (37) en forme d'étrier ayant deux bras (37b).

15. Ensemble d'embrayage selon la revendication 14, **caractérisé en ce que** l'un des bras (37b) est précontraint contre le manchon de changement de vitesse (2) dans une direction tangentielle à l'orbite (11), et **en ce que** l'autre bras (37b) est précontraint contre le manchon de changement de vitesse (2) dans une direction tangentielle opposée à ladite direction tangentielle, et chacun des bras (37b) est encliqueté, au moins de manière intermittente, dans une de deux cavités d'arrêt (15) sur le manchon de changement de vitesse (2).

16. Ensemble d'embrayage selon la revendication 14, **caractérisé en ce que** le ressort de pression (37) comprend une entretoise (37a) orientée en travers des directions d'allure de l'axe de rotation (1a) et qui relie les bras (37b), l'un à l'autre, les bras (37b) sont parallèles, l'un à l'autre, et chaque bras (37b) s'étend à partir de l'entretoise (37a), d'abord à l'équerre à l'entretoise (37a), et comprend dans son cours ultérieur un arc (37c) formé en direction de la cavité d'arrêt (15), et, finalement, l'extrémité libre (37d) de chaque bras (37b) est orientée, de nouveau, dans la direction d'allure.

17. Ensemble d'embrayage selon la revendication 16, **caractérisé en ce que** les extrémités (37d) du ressort de pression (37) sont incurvées, l'une vers l'autre.
